(19)

Europäisches Patentamt
European Patent Office
Office européen des brevets

(11)  **EP 4 538 240 A1**

(12)  **EUROPEAN PATENT APPLICATION**
published in accordance with Art. 153(4) EPC

(43) Date of publication:
**16.04.2025  Bulletin 2025/16**

(21) Application number: **23849876.0**

(22) Date of filing: **14.07.2023**

(51) International Patent Classification (IPC):
**C03B 5/16** (2006.01)

(52) Cooperative Patent Classification (CPC):
**C03B 5/16**

(86) International application number:
**PCT/JP2023/026103**

(87) International publication number:
**WO 2024/029317 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **02.08.2022   JP 2022123289**

(71) Applicant: **Nippon Electric Glass Co., Ltd.
Otsu-shi, Shiga 520-8639 (JP)**

(72) Inventors:
• **ASAI Kosuke
Otsu-shi, Shiga 520-8639 (JP)**
• **ITAZU Hiroyuki
Otsu-shi, Shiga 520-8639 (JP)**
• **TOKUNAGA Shingo
Otsu-shi, Shiga 520-8639 (JP)**

(74) Representative: **Tetzner, Michael
Tetzner & Partner mbB
Patent- und Rechtsanwälte
Van-Gogh-Strasse 3
81479 München (DE)**

(54)  **DEVICE AND METHOD FOR PRODUCING GLASS ARTICLE AND METHOD FOR MEASURING LIQUID-SURFACE HEIGHT**

(57)  A manufacturing apparatus for a glass article includes: a melting furnace (1) as a storage tank; and a measurement device (21) configured to measure a height (H1) of a liquid surface (LS) of a molten glass (Gm) stored in the melting furnace (1). The measurement device (21) includes: a nozzle (22) to be immersed from above the liquid surface (LS) into the molten glass (Gm); a pipe (23), which is led from an outside of the melting furnace (1) into the melting furnace (1) at a position higher than the liquid surface (LS), and is configured to allow supply of a gas (A) to the nozzle (22); and a pressure gauge (25) configured to measure a pressure in the pipe (23) or the nozzle (22) under a state in which air bubbles (B) are being generated in the molten glass (Gm) with the gas (A) supplied from a distal end of the nozzle (22).

Fig. 3

EP 4 538 240 A1

# Description

Technical Field

The present invention relates to a technology to measure a liquid-surface height of a molten glass stored in a storage tank.

Background Art

For a manufacturing method for a glass article such as a glass fiber or a glass sheet, a storage tank in which a molten glass is stored is used. It is required for this kind of storage tank that a large change in liquid-surface height of the molten glass stored in the storage tank be suppressed so as to achieve homogenization of the molten glass or stabilize a flow rate of the molten glass. Thus, it is important to measure the liquid-surface height of the molten glass.

As a liquid-surface height measurement device configured to measure the liquid-surface height of the molten glass, there is disclosed in Patent Literature 1, for example, a liquid-surface height measurement device that supplies a gas into the molten glass via a flow passage member to generate air bubbles. The liquid-surface height measurement device determines the liquid-surface height of the molten glass based on a pressure (back pressure) in the flow passage member under a state in which the air bubbles are being generated.

Citation List

Patent Literature 1: JP 2021-151948 A

Summary of Invention

Technical Problem

In the liquid-surface height measurement device described in Patent Literature 1, the flow passage member is liable to be damaged or wear out due to heat or be eroded by the molten glass, and thus, in some cases, is required to be replaced. However, the flow passage member is introduced into the molten glass at a position lower than a liquid surface of the molten glass through a bottom wall or a side wall of the storage tank (melting furnace). That is, an introduction portion (hole) for the flow passage member in a wall portion of the storage tank is located at a position lower than the liquid surface of the molten glass and is facing the molten glass. Thus, when the flow passage member is replaced, there arises a risk of leakage of the molten glass stored in the storage tank from the introduction portion for the flow passage member. As a result, there arises a problem in that the liquid-surface height measurement device described in Patent Literature 1 is extremely difficult to maintain.

Further, when the liquid-surface height measurement device described in Patent Literature 1 is to be applied to an existing storage tank, an introduction portion for the flow passage member is required to be additionally formed in the wall portion of the storage tank at a position lower than the liquid surface of the molten glass. However, the molten glass is already stored in the existing storage tank. Thus, when the introduction portion for the flow passage member is formed, the molten glass may leak out. Thus, there arises another problem in that the liquid-surface height measurement device described in Patent Literature 1 is extremely difficult to apply to the existing storage tank.

The present invention has an object to provide a liquid-surface height measurement device and a liquid-surface height measurement method that allow easy maintenance and easy application to an existing storage tank.

Solution to Problem

(1) According to the present invention devised in order to solve the problems described above, there is provided a manufacturing apparatus for a glass article, comprising: a storage tank configured to store a molten glass; and a liquid-surface height measurement device configured to measure a height of a liquid surface of the molten glass stored in the storage tank. The liquid-surface height measurement device comprises: a nozzle to be immersed from above the liquid surface into the molten glass; a pipe, which is led from an outside of the storage tank into the storage tank at a position higher than the liquid surface and is configured to allow supply of a gas to the nozzle; and a pressure gauge configured to measure a pressure in the pipe or the nozzle.

In this manner, the nozzle is immersed from above the liquid surface of the molten glass into the molten glass, and the pipe is led from the outside of the storage tank into the storage tank at a position higher than the liquid surface of the molten glass. That is, an introduction portion for the pipe in a wall portion of the storage tank is located at the position higher than the liquid surface of the molten glass. Thus, leakage of the molten glass from the introduction portion for the pipe does not substantially occur. Thus, the liquid-surface height measurement device can easily be maintained and easily be applied to an existing storage tank.

(2) In the configuration of the above-mentioned item (1), it is preferred that the pipe be led from the outside of the storage tank into the storage tank through a hole formed in a side wall of the storage tank.

In this manner, the pipe can be made shorter than in a case in which a pipe is provided to pass through a ceiling wall of the storage tank. Thus, facility costs can be reduced.

(3) In the configuration of the above-mentioned item (1) or (2), it is preferred that the nozzle be held at a predetermined height by the pipe.

In this manner, a holding member for the nozzle is not required to be additionally provided. Thus, a facility configuration can be simplified, and the facility costs can be reduced.

(4) In the configuration of any one of the above-mentioned items (1) to (3), it is preferred that the pipe comprise a cooling structure.

In this manner, damage and wear due to heat of the pipe can be suppressed.

(5) In the configuration of any one of the above-mentioned items (1) to (4), it is preferred that the nozzle comprise a pipe portion made of platinum or a platinum alloy, through which the gas is to flow.

In this manner, damage and wear due to heat and erosion by the molten glass can be suppressed.

(6) In the configuration of the above-mentioned item (5), it is preferred that the nozzle comprise: a fire-resistant layer being made of a refractory and covering the pipe portion; and a protective layer being made of platinum or a platinum alloy and covering the fire-resistant layer.

In this manner, the erosion of the nozzle by the molten glass can be suppressed by the protective layer. Further, strength of the nozzle can be improved by the fire-resistant layer. Thus, deformation of the nozzle under a force from glass raw materials or the molten glass at the time of immersion into the molten glass can be suppressed.

(7) In the configuration of the above-mentioned item (6), it is preferred that a distal end portion of the pipe portion be free from being covered with the fire-resistant layer, and be exposed.

In this manner, an outer diameter of a distal end of the nozzle can be reduced. Hence, air bubbles are less liable to stagnate around the distal end of the nozzle. Thus, when the air bubbles are generated from the distal end of the nozzle, a back pressure corresponding to a pressure applied to the molten glass around the distal end of the nozzle properly acts inside the nozzle or the pipe. As a result, measurement accuracy for the height of the liquid surface is improved.

(8) According to the present invention devised in order to solve the problems described above, there is provided a liquid-surface height measurement method of measuring a height of a liquid surface of a molten glass stored in a storage tank, the method comprising: providing: a nozzle to be immersed from above the liquid surface into the molten glass; and a pipe, which extends from an outside of the storage tank through a space above the molten glass in the storage tank, and is configured to allow supply of a gas to the nozzle; and determining the height of the liquid surface based on a pressure in the pipe or the nozzle.

In this manner, the same actions and effects as those of the corresponding configurations that have been described above can be enjoyed.

(9) According to the present invention devised in order to solve the problems described above, there is provided a manufacturing method for a glass article, comprising a liquid-surface height measurement step of measuring a height of a liquid surface of a molten glass stored in a storage tank. In the liquid-surface height measurement step, the height of the liquid surface is measured by the method comprising the configuration of the above-mentioned item (8).

In this manner, the same actions and effects as those of the corresponding configurations that have been described above can be enjoyed.

Advantageous Effects of Invention

According to the present invention, the liquid-surface height measurement device and the liquid-surface height measurement method that allow easy maintenance and easy application to an existing storage tank can be provided.

Brief Description of Drawings

FIG. 1 is a side view for illustrating a manufacturing apparatus for a glass article according to a first embodiment of the present invention.
FIG. 2 is a sectional view of a melting furnace.
FIG. 3 is a sectional view taken along the line I-I of FIG. 2.
FIG. 4 is an enlarged sectional view of a nozzle of a liquid-surface height measurement device and therearound.
FIG. 5 is a sectional view taken along the line II-II of FIG. 4.
FIG. 6 is an enlarged view of a nozzle of a liquid-surface height measurement device according to a second embodiment of the present invention and therearound.
FIG. 7 is a sectional view of a melting furnace according to a third embodiment of the present invention.

Description of Embodiments

Now, embodiments of the present invention are described with reference to the attached drawings. Overlapping description may be omitted by denoting corresponding constituent elements in the embodiments by the same reference symbols. When only part of a configuration is described in each of the embodiments, a configuration in other embodiments that has already been described may be adopted for other parts of the configuration. In addition, configurations may be combined in a combination explicit in the description of each of the embodiments, and not only that, part of configurations of a plurality of the embodiments may be combined in an even implicit combination as long as the combination has no particular disadvantage.

(First Embodiment)

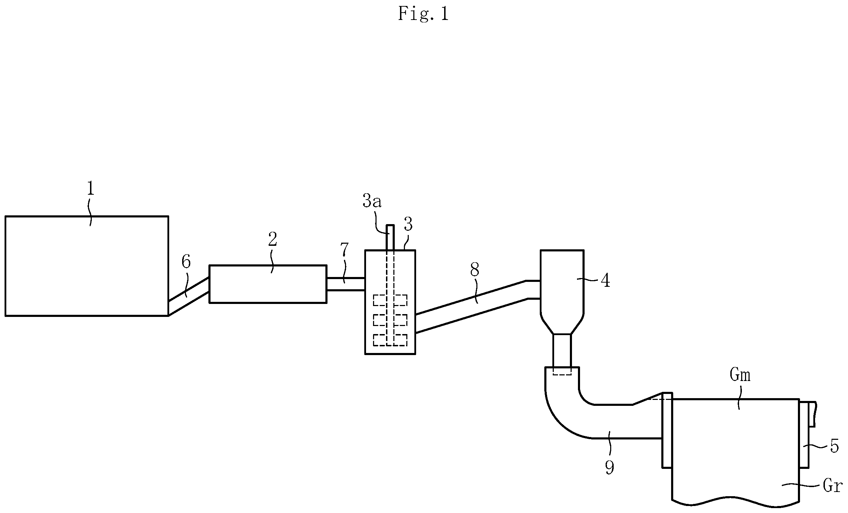

As illustrated in FIG. 1, a manufacturing apparatus for a glass article according to a first embodiment comprises: a melting furnace 1; a fining bath 2; a homogenization bath (stirring bath) 3; a pot 4; a forming body 5; and transfer pipes 6 to 9 that connect those constituent elements 1 to 5 to each other.

The melting furnace 1 is a space for performing a melting step of obtaining a molten glass Gm. The melting furnace 1 functions as a storage tank for storing the molten glass Gm.

The fining bath 2 is a space for performing a fining step of fining (degassing) the molten glass Gm supplied from the melting furnace 1 through the action of a fining agent or the like.

The homogenization bath 3 is a space for performing a homogenization step of stirring, with a stirrer 3a, the molten glass Gm having been fined to homogenize the molten glass Gm. The homogenization bath 3 may comprise a plurality of homogenization baths connected to one another.

The pot 4 is a space for performing a state adjustment step of adjusting the state (for example, viscosity) of the molten glass Gm so as to be suitable for forming. The pot 4 may be omitted.

The forming body 5 forms a forming device, and is a component for performing a forming step of forming the molten glass Gm into a desired shape. In this embodiment, the forming body 5 is configured to form the molten glass Gm into a strip-shaped glass ribbon by an overflow down-draw method.

The forming body 5 has a substantially wedge shape in a sectional shape (sectional shape perpendicular to the drawing sheet), and has an overflow groove (not shown) formed in an upper portion thereof. The molten glass Gm is supplied to the overflow groove through the transfer pipe 9. The molten glass Gm supplied to the overflow groove overflows from the overflow groove and flows down along both side wall surfaces (side surfaces located on a front surface side and a back surface side of the drawing sheet) of the forming body 5. The molten glass Gm flowing down along the side wall surfaces join each other at lower end portions of the side wall surfaces, and is formed into a strip-shaped glass ribbon Gr. The glass ribbon Gr having been formed is subjected to treatments, such as annealing and cutting, to thereby manufacture, as the glass article, a glass sheet or a glass roll in which the glass ribbon is taken up.

A thickness of the glass ribbon Gr (thickness of a central portion (small-thickness portion) in a width direction except for edge portions (large-thickness portions) at both ends in the width direction) is, for example, preferably from 0.01 mm to 2 mm, more preferably from 0.1 mm to 1 mm.

The glass sheet or the glass roll is utilized for a display (for example, a liquid crystal display or an organic EL display), a substrate of an organic EL illumination or a solar cell, or a protective cover.

The forming device is not limited to a device for performing the overflow down-draw method. For example, the forming device may be a device for performing any other down-draw method, such as a slot down-draw method, or a float method.

The transfer pipes 6 to 9 are each formed of, for example, a tubular pipe made of platinum or a platinum alloy, and are each configured to transfer the molten glass Gm in a lateral direction (substantially horizontal direction). The transfer pipes 6 to 9 are heated through application of a current as required. The platinum comprises strengthened platinum, and the platinum alloy comprises a strengthened platinum alloy (the same applies hereinafter).

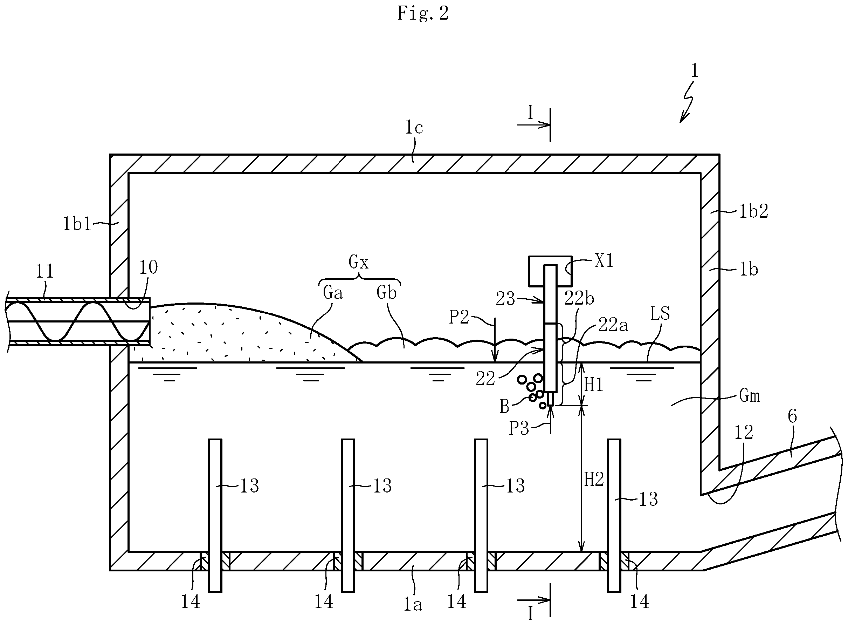

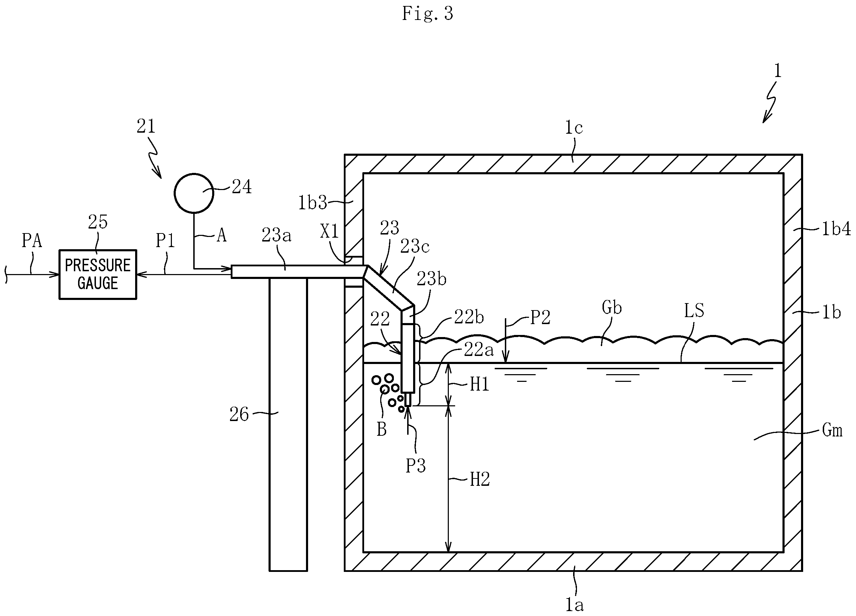

As illustrated in FIG. 2 and FIG. 3, the melting furnace 1 comprises a bottom wall 1a, a side wall 1b, and a ceiling wall 1c. Those constituent elements 1a to 1c define a space for storing the molten glass Gm. The side wall 1b comprises a front wall 1b1, a rear wall 1b2, a left wall 1b3, and a right wall 1b4.

The melting furnace 1 is configured to continuously melt glass raw materials Ga to form the molten glass Gm. The glass raw materials Ga may comprise cullet in addition to a natural raw material and a chemical raw material. It is preferred that the molten glass Gm be alkali-free glass or aluminosilicate glass for chemical strengthening.

A feed port 10 for feeding the glass raw materials Ga is formed in the front wall 1b1 of the melting furnace 1. A screw feeder 11 serving as a raw material supply part is provided in the feed port 10. The raw material supply part may be other publicly known part, such as a pusher or a vibrating feeder. The number or arrangement position of the raw material supply part may be appropriately changed depending on the size of the melting furnace 1, or the like.

An outflow port 12 for allowing outflow of the molten glass Gm is formed in the rear wall 1b2 of the melting furnace 1. The transfer pipe 6 is connected to the outflow port 12 so that the molten glass Gm is supplied sequentially to a downstream side.

A plurality of rod-shaped electrodes 13 are mounted to the bottom wall 1a of the melting furnace 1. The shape of the electrode 13 is not limited to a rod shape, and may be a sheet shape, a block shape, or a combination thereof. The mounting positions of the electrodes 13 are not limited to the bottom wall 1a, and the electrodes 13 may be mounted to the left wall 1b3 and the right wall 1b4. The electrode 13 is made of, for example, molybdenum (Mo). The electrodes 13 heat the molten glass Gm through application of a current in a state of being immersed in the molten glass Gm. The electrodes 13 pass through through holes formed in the bottom wall 1a in a state of being held in cylindrical electrode holders 14, each comprising a cooling mechanism (not shown). A heating method used in the melting furnace 1 is not limited to all-electric melting using only heating through application of a current, and may be, for example, a heating method using only combustion (burner) of a gas fuel, which is performed from above a liquid surface LS of the molten glass Gm, or a heating method using a combination of heating through application of a current and combustion of a gas fuel.

As illustrated in FIG. 3, the melting furnace 1 comprises a liquid-surface height measurement device 21 configured to measure a height H1 of the liquid surface LS of the molten glass Gm. The height H1 of the liquid surface LS of the molten glass Gm is defined based on a height position of a distal end of a nozzle 22 as a reference (zero level).

The liquid-surface height measurement device 21 comprises the nozzle 22, a pipe 23, a gas supply part 24, and a pressure gauge 25.

The nozzle 22 generates, from its distal end, air bubbles B in the molten glass Gm. The nozzle 22 is immersed from above the liquid surface LS into the molten glass Gm. The nozzle 22 has a substantially vertical posture, and comprises a first part 22a and a second part 22b. The first part 22a is positioned below the liquid surface LS and is immersed in the molten glass Gm. The second part 22b is positioned above the liquid surface LS and is not immersed in the molten glass Gm. The first part 22a comprises the distal end portion of the nozzle 22, and the second part 22b comprises a proximal end portion of the nozzle 22. The nozzle 22 may have an inclined posture.

The pipe 23 allows supply of a gas A for generating the air bubbles B to the nozzle 22. The gas A is supplied into the pipe 23 from the gas supply part (for example, compressor) 24. The pipe 23 is led, with a substantially horizontal posture, from an outside of the melting furnace 1 into the melting furnace 1 through a transverse hole X1 that is formed in the side wall 1b (left wall 1b3 in the illustrated example) of the melting furnace 1 at a position higher than the liquid surface LS. The pipe 23 led into the melting furnace 1 is bent downward so as to change its posture from the substantially horizontal posture into a substantially vertical posture in a space above the liquid surface LS, and is connected to the proximal end portion of the nozzle 22, which is positioned above the liquid surface LS. That is, the pipe 23 is not in contact with the molten glass Gm.

Specifically, the pipe 23 comprises a first straight part 23a, a second straight part 23b, and a third straight part 23c. The first straight part 23a extends in a substantially horizontal direction. The second straight part 23b extends in a substantially vertical direction. The third straight part 23c is provided between the first straight part 23a and the second straight part 23b, and is inclined downward from the first straight part 23a to reach the second straight part 23b. The first straight part 23a is arranged so as to extend between an inside and the outside of the melting furnace 1 through the transverse hole X1 in the side wall 1b. The second straight part 23b and the third straight part 23c are arranged in the melting furnace 1. The shape of the pipe 23 is not limited to any particular shape. The pipe 23 may be formed by, for example, coupling the first straight part 23a and the second straight part 23b to each other to define a substantially right angle without comprising the third straight part 23c or may comprise a curved part in place of the third straight part 23c.

The transverse hole X1 for allowing passage of the pipe 23 may be a hole additionally formed at a position on the side wall 1b, which is higher than the liquid surface LS. For example, when transverse holes such as observation windows for observation of an inside of the furnace are already formed at positions on the side wall 1b, which are higher than the liquid surface LS, those existing transverse holes may be used. When a gap is defined between the pipe 23 and the transverse hole X1 under a state in which the pipe 23 is inserted through the transverse hole X1, a blanket, a refractory or the like may be arranged in the gap so as to fill the gap.

The nozzle 22 and the pipe 23 are integrated with each other through connection. The nozzle 22 is held at a predetermined height by the pipe 23. That is, besides the pipe 23, a member that holds the nozzle 22 is not provided in the melting furnace 1. The pipe 23 and the nozzle 22 can be inserted into and removed from the melting furnace 1 through the transverse hole X1. In this embodiment, the pipe 23 is held by a holding member 26 outside the melting furnace 1.

The transverse hole X1 through which the pipe 23 is to be inserted is positioned above the liquid surface LS of the molten glass Gm. Thus, leakage of the molten glass Gm from the transverse hole X1 to the outside does not substantially occur. Thus, the liquid-surface height measurement device 21 can easily be maintained and easily be applied to an existing melting furnace 1.

The pressure gauge 25 is configured to measure a pressure (back pressure) in the pipe 23 or the nozzle 22 when the air bubbles B are generated in the molten glass Gm with the gas A supplied from the distal end of the nozzle 22. The pipe 23 and the nozzle 22 form one gas supply path. Thus, the pressure in the pipe 23 and the pressure in the nozzle 22 are substantially the same. Thus, any of the pressure in the pipe 23 and the pressure in the nozzle 22 may be measured. In this embodiment, the pressure gauge 25 measures the pressure in the pipe 23 outside the melting furnace 1.

In the liquid-surface height measurement device 21, the height H1 of the liquid surface LS of the molten glass Gm is determined in the following manner.

When the height H1 of the liquid surface LS of the molten glass Gm is to be measured, the liquid-surface height measurement device 21 generates the air bubbles B in the molten glass Gm from the distal end of the nozzle 22. Timing of generation of the air bubbles B coincides with a time at which a pressure P1 in the pipe 23 and in the nozzle 22 becomes substantially equal to a sum (P2+P3) of a pressure P2 at the liquid surface LS of the molten glass Gm and a pressure P3 of the molten glass Gm at the height position of the distal end portion of the nozzle 22. That is, relationships expressed by Expressions (1) to (3) are established among the pressures described above. In Expressions, $\rho$ represents a density of the molten glass Gm, and "g" represents a gravitational acceleration.

$$P1=P2+P3 \quad (1)$$

$$P3=\rho gH1 \quad (2)$$

$$H1=(P1-P2)/\rho g \quad (3)$$

Thus, when a differential pressure (P1-P2) between the pressure P1 in the pipe 23 and the pressure P2 at the liquid surface LS of the molten glass Gm is measured, the height H1 of the liquid surface LS of the molten glass Gm can be calculated from Expression (3).

In this embodiment, the pressure gauge 25 is formed of a differential pressure gauge (for example, a gauge pressure meter). Here, the pressure P2 at the liquid surface LS of the molten glass Gm inside the melting furnace 1 is sometimes adjusted to be higher than or lower than an atmospheric pressure PA. Even in those cases, however, a difference between the pressure P2 at the liquid surface LS of the molten glass Gm and the atmospheric pressure PA is slight, and thus the pressure P2 and the atmospheric pressure PA can be regarded as being substantially equal to each other. Thus, in this embodiment, the pressure gauge 25 is configured to measure a differential pressure (P1-PA) between the pressure P1 in the pipe 23 and the atmospheric pressure PA in place of measuring the differential pressure (P1-P2) between the pressure P1 in the pipe 23 and the pressure P2 at the liquid surface LS of the molten glass Gm. Then, the measurement of the differential pressure (P1-PA) allows the calculation of the height H1 of the liquid surface LS of the molten glass Gm from Expression (4).

$$H1=(P1-PA)/\rho g \quad (4)$$

The pressure gauge 25 may be configured to measure the differential pressure (P1-P2). The pressure gauge 25 may be an absolute pressure gauge capable of individually measuring the pressures required for the calculation of the height H1. The liquid-surface height measurement device 21 may comprise a computing part configured to automatically compute the height H1 of the liquid surface LS of the molten glass Gm according to Expression (3) or (4). Further, a height difference H2 between the bottom wall 1a and the height position of the distal end of the nozzle 22 can be measured in advance or set to a specified value. Thus, a height (H1+H2) of the liquid surface LS of the molten glass Gm from the bottom wall 1a serving as a reference (zero level) can also be determined.

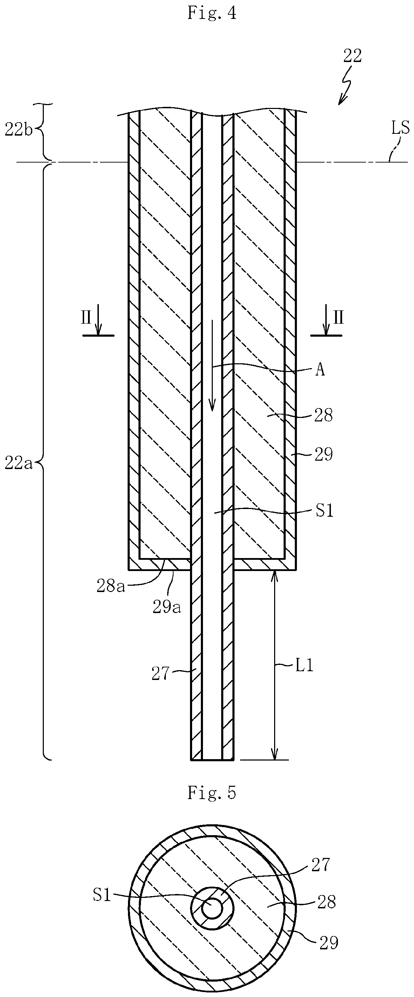

As illustrated in FIG. 4 and FIG. 5, the nozzle 22 comprises a pipe portion 27, a fire-resistant layer 28, and a protective layer 29.

The pipe portion 27 is a tubular body made of platinum or a platinum alloy and has an inside S1 through which the gas A is to flow. When the pipe portion 27 is made of platinum or a platinum alloy as described above, damage and wear of the pipe portion 27 due to heat or erosion of the pipe portion 27 by the molten glass Gm can be suppressed.

The fire-resistant layer 28 is a layer being made of a refractory and covering the pipe portion 27. With the fire-resistant layer 28 being provided in this manner, strength of the nozzle 22 can be improved. Thus, deformation of the nozzle 22 (precisely, the pipe portion 27) under a force (for example, upward force) from the glass raw materials Ga, the molten glass Gm, or the like at the time of, for example, immersion into the molten glass Gm can be suppressed. As the refractory for forming the fire-resistant layer 28, for example, a brick or an unshaped refractory may be used. As the brick, for example, a zirconia-based electrocast brick, an alumina-based electrocast brick, an alumina-zirconia-based electrocast brick, an AZS (Al-Zr-Si)-based electrocast brick, or high-purity alumina (for example, alumina pipe) may be used. As the unshaped refractory, for example, refractory cement such as alumina cement may be used.

The protective layer 29 is a layer made of platinum or a platinum alloy for covering the fire-resistant layer 28. With the protective layer being provided in this manner, the erosion of the fire-resistant layer 28 by the molten glass Gm can be suppressed.

A distal end portion of the pipe portion 27 is not covered with the fire-resistant layer 28 or the protective layer 29, and is exposed. That is, the distal end portion of the pipe portion 27 protrudes downward beyond a distal end portion of the fire-resistant layer 28 and a distal end portion of the protective layer 29. A protrusion amount L1 of the exposed distal end portion of the pipe portion 27 is, for example, preferably from 10 mm to 200 mm, more preferably from 50 mm to 100 mm. An outer diameter of the exposed pipe portion 27 is, for example, preferably from 10 mm to 50 mm, more preferably from 10 mm to 30 mm. The distal end of the fire-resistant layer 28 and the distal end of the protective layer 29 respectively comprise flat surface portions 28a and 29a that are substantially orthogonal to a longitudinal direction of the pipe portion 27. When the pipe portion 27 has the distal end portion being exposed as described above, an outer diameter of the distal end portion of the nozzle 22 can be reduced. Hence, the air bubbles B are less liable to stagnate around the distal end portion of the nozzle 22. Thus, when the air bubbles B are generated from the distal end portion of the nozzle 22, the back pressure is properly exerted in the nozzle 22 or the pipe 23. As a result, measurement accuracy for the height H1 of the liquid surface LS is improved.

Although not shown, the pipe 23 comprises an inner pipe and a cooling structure. The gas A for generating the air bubbles B in the molten glass Gm flows through the inner pipe. The cooling structure is arranged so as to cover the inner pipe. The inner pipe and the cooling structure can be made of, for example, stainless steel or heat-resistant steel.

A proximal end portion of the inner pipe is in communication with the gas supply part 24. A distal end portion of the inner pipe is in communication with a proximal end portion of the pipe portion 27 of the nozzle 22. Thus, the gas A supplied from the gas supply part 24 flows through an inside of the inner pipe of the pipe 23, flows through the inside S1 of the pipe portion 27 of the nozzle 22, and is then discharged into the molten glass Gm.

The cooling structure comprises a flow passage through which refrigerant supplied to and discharged from the outside is to flow. Thus, damage and wear due to heat of the pipe 23 (inner pipe) can be prevented.

Now, a method of manufacturing a glass article using the manufacturing apparatus having the above-mentioned configuration is described.

The method comprises: a melting step; a molten-glass supply step; a forming step; an annealing step; and a cutting step.

In the melting step, the glass raw materials Ga supplied into the melting furnace 1 are heated to produce the molten glass Gm. The liquid surface LS of the molten glass Gm may be covered with a covering layer Gx. The covering layer Gx comprises the glass raw materials Ga and/or a foam layer Gb. The foam layer Gb is formed along with the generation of a carbon oxide gas (CO or $CO_2$), an $O_2$ gas, an $SO_2$ gas or the like from the glass raw materials Ga. Heat dissipation from the molten glass Gm can be suppressed by covering the liquid surface LS of the molten glass Gm with the covering layer Gx as described above. As a result, a temperature of the molten glass Gm can be reliably maintained, and hence energy saving can be achieved. The foam layer Gb may be omitted.

The melting step further comprises a liquid-surface height measurement step of measuring the height of the liquid surface LS of the molten glass Gm stored in the melting furnace 1. In the liquid-surface height measurement step, the height of the liquid surface LS is measured by using the liquid-surface height measurement device 21. Specifically, the gas A is supplied to the nozzle 22 through the pipe 23 so that the air bubbles B are generated in the molten glass Gm from the distal end of the nozzle 22. Then, the differential pressure (P1-PA) between the pressure P1 in the nozzle 22 (pipe portion 27) or the pipe 23 and the atmospheric pressure PA at the time of generation of the air bubbles B is measured with the pressure gauge 25. The height H1 of the liquid surface LS is calculated based on the measured differential pressure (P1-PA) from Expression (4).

In the molten-glass supply step, the molten glass Gm in the melting furnace 1 is transferred sequentially to the fining bath **2,** the homogenization bath 3, the pot 4, and the forming body 5 via the transfer pipes 6 to 9. In the fining bath 2, the molten glass Gm is subjected to fining (bubble removal) by the action of a fining agent or the like (fining step). In the homogenization bath 3, the molten glass Gm is stirred to be homogenized (homogenization step). In the pot 4, a state (for example, a viscosity or a flow rate) of the molten glass Gm is adjusted (state adjustment step).

In the forming step after the molten-glass supply step, the molten glass Gm is supplied to the forming body 5. The forming body 5 causes the molten glass Gm to overflow from the overflow groove to flow down along the side wall surfaces of the forming body 5. The forming body 5 causes the molten glasses Gm having flowed down to join each other at lower end portions to thereby form the glass ribbon Gr.

After that, in the annealing step, the glass ribbon Gr is cooled in an annealing furnace. In the cutting step, the glass ribbon Gr is cut by a cutting device. As a result, a glass sheet having predetermined dimensions is cut out from the glass ribbon Gr. Alternatively, after both end portions (edge portions) of the glass ribbon Gr in the width direction are removed in the cutting step, the glass ribbon Gr may be taken up into a roll to thereby obtain a glass roll (take-up step).

(Second Embodiment)

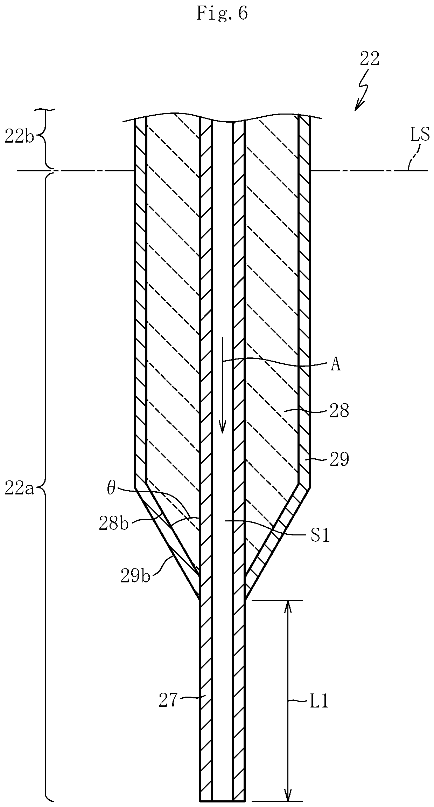

As illustrated in FIG. 6, in a second embodiment, a modification example of the nozzle 22 of the liquid-surface measurement device 21 is exemplified.

As illustrated in FIG. 6, in this embodiment, a nozzle 22 comprises, as in the first embodiment, a pipe portion 27, a fire-resistant layer 28, and a protective layer 29. A distal end portion of the pipe portion 27 is not covered with the fire-resistant layer 28 or the protective layer 29, and is exposed. That is, the distal end portion of the pipe portion 27 protrudes downward beyond a distal end portion of the fire-resistant layer 28 and a distal end portion of the protective layer 29.

Meanwhile, as a difference from the first embodiment, the distal end portion of the fire-resistant layer 28 and the distal end portion of the protective layer 29 comprise tapered portions 28b and 29b. The tapered portions 28b and 29b have diameters gradually increased upward from distal ends. When the tapered portions 28b and 29b are formed in this manner, air bubbles B floating up by buoyancy are smoothly guided upward along the tapered portions 28b and 29b. Thus, the air bubbles B are further less liable to stagnate around a distal end portion of the nozzle 22, and measurement accuracy for a height H1 of a liquid surface LS is further improved. Further, a force that the nozzle 22 receives from the glass raw materials Ga, the molten glass Gm, or the like at the time of, for example, immersion into the molten glass Gm can be reduced, and hence the nozzle 22 can be smoothly immersed into the molten glass.

An inclination angle θ of the tapered portions 28b and 29b with respect to the vertical direction is preferably from 10° to 60°, more preferably from 30° to 45°.

(Third Embodiment)

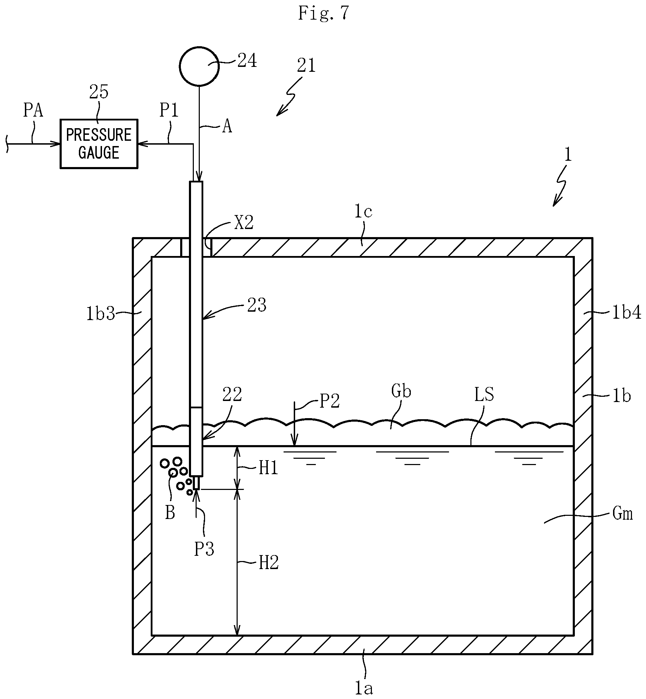

As illustrated in FIG. 7, in a third embodiment, a modification example of the pipe 23 of the liquid-surface measurement device 21 is exemplified.

In this embodiment, a pipe 23, which has a substantially vertical posture, is led from an outside of a melting furnace 1 into the melting furnace 1 through a longitudinal hole X2 formed in a ceiling wall 1c of the melting furnace 1 at a position higher than a liquid surface LS. The pipe 23 led into the melting furnace 1 is connected to a proximal end portion of a nozzle 22, which is positioned above the liquid surface LS, while maintaining the substantially vertical posture. A distal end portion side of the nozzle 22 is immersed from above the liquid surface LS into a molten glass Gm.

Here, when the pipe 23 is led from the outside of the melting furnace 1 into the melting furnace 1 through the longitudinal hole X2 in the ceiling wall 1c, a length of the pipe 23 has a tendency to be longer than in a case in which the pipe 23 is led from the outside of the melting furnace 1 into the melting furnace 1 through the transverse hole X1 in the side wall 1b. Thus, in terms of reduction in facility costs, as described in the first embodiment, it is preferred that the pipe 23 be led from the outside of the melting furnace 1 into the melting furnace 1 through the transverse hole X1 in the side wall 1b.

The present invention is not limited to the configurations of the above-mentioned embodiments. In addition, the action and effect of the present invention are not limited to those described above. The present invention may be modified in various forms within the range not departing from the spirit of the present invention.

In the embodiments, a glass sheet and a glass roll have been exemplified as the glass article. However, the glass article may be, for example, a glass sphere, a glass tube, a glass block, a glass fiber, or the like, and may have other appropriate shapes.

In the embodiments, the measurement of the height of the liquid surface of the molten glass stored in the melting furnace has been described. The present invention is also applicable to measurement of a height of a liquid surface of a molten glass stored in a storage tank other than the melting furnace, such as a feeder connected to the melting furnace or a fining bath having furnace walls made of a refractory. In a case of a manufacturing apparatus for a glass fiber, the feeder comprises a bushing including a plurality of nozzles for forming a glass fiber from a molten glass.

Reference Signs List

| 1 | melting furnace |
|---|---|
| 1a | bottom wall |
| 1b | side wall |
| 1c | ceiling wall |
| 2 | fining bath |
| 3 | homogenization bath |
| 4 | pot |
| 5 | forming body |
| 6 to 9 | transfer pipe |
| 10 | feed port |
| 11 | screw feeder |
| 12 | outflow port |
| 13 | electrode |
| 14 | electrode holder |
| 21 | measurement device |
| 22 | nozzle |
| 23 | pipe |
| 24 | gas supply part |
| 25 | pressure gauge |
| 26 | holding member |
| 27 | pipe portion |
| 28 | fire-resistant layer |
| 29 | protective layer |
| A | gas |
| B | bubble |
| Ga | glass raw material |
| Gb | foam layer |
| Gm | molten glass |
| Gr | glass ribbon |
| Gx | covering layer |
| LS | liquid surface of molten glass |
| X1 | transverse hole (side wall) |
| X2 | longitudinal hole (ceiling wall) |

**Claims**

1. A manufacturing apparatus for a glass article, comprising:

   a storage tank configured to store a molten glass; and
   a liquid-surface height measurement device configured to measure a height of a liquid surface of the molten glass stored in the storage tank,
   wherein the liquid-surface height measurement device comprises:

   a nozzle to be immersed from above the liquid surface into the molten glass;
   a pipe, which is led from an outside of the storage tank into the storage tank at a position higher than the liquid surface and is configured to allow supply of a gas to the nozzle; and
a pressure gauge configured to measure a pressure in the pipe or the nozzle.

2. The manufacturing apparatus for a glass article according to claim 1, wherein the pipe is led from the outside of the storage tank into the storage tank through a hole formed in a side wall of the storage tank.

3. The manufacturing apparatus for a glass article according to claim 1 or **2,** wherein the nozzle is held at a predetermined height by the pipe.

4. The manufacturing apparatus for a glass article according to claim 1 or **2,** wherein the pipe comprises a cooling structure.

5. The manufacturing apparatus for a glass article according to claim 1 or **2,** wherein the nozzle comprises a pipe portion made of platinum or a platinum alloy, through which the gas is to flow.

6. The manufacturing apparatus for a glass article according to claim 5, wherein the nozzle comprises:

   a fire-resistant layer being made of a refractory and covering the pipe portion; and
   a protective layer being made of platinum or a platinum alloy and covering the fire-resistant layer.

7. The manufacturing apparatus for a glass article according to claim 6, wherein a distal end portion of the pipe portion is free from being covered with the fire-resistant layer, and is exposed.

8. A liquid-surface height measurement method of measuring a height of a liquid surface of a molten glass stored in a storage tank, the method comprising:

   providing: a nozzle to be immersed from above the liquid surface into the molten glass; and a pipe, which is led from an outside of the storage tank into the storage tank at a position higher than the liquid surface, and is configured to allow supply of a gas to the nozzle; and
   determining the height of the liquid surface based on a pressure in the pipe or the nozzle.

9. A manufacturing method for a glass article, comprising a liquid-surface height measurement step of measuring a height of a liquid surface of a molten glass stored in a storage tank,
   wherein, in the liquid-surface height measurement step, the height of the liquid surface is measured by the method of claim 8.

EP 4 538 240 A1

Fig.1

Fig.2

EP 4 538 240 A1

Fig. 3

Fig. 4

22

22b

LS

II
II

A
28
29
S1

22a

28a
29a

27

L1

Fig. 5

S1
27
28
29

Fig. 6

Fig. 7

<div align="center">

**INTERNATIONAL SEARCH REPORT**

</div>

| | International application No. |
|---|---|
| | **PCT/JP2023/026103** |

| | |
|---|---|
| **A. CLASSIFICATION OF SUBJECT MATTER** | |
| ***C03B 5/16*** (2006.01)i | |
| FI: C03B5/16 | |

According to International Patent Classification (IPC) or to both national classification and IPC

| | |
|---|---|
| **B. FIELDS SEARCHED** | |

Minimum documentation searched (classification system followed by classification symbols)

     C03B5/00-5/44; F27B1/00-21/14; F27D17/00-99/00; G01F23/00-25/20

Documentation searched other than minimum documentation to the extent that such documents are included in the fields searched

     Published examined utility model applications of Japan 1922-1996
     Published unexamined utility model applications of Japan 1971-2023
     Registered utility model specifications of Japan 1996-2023
     Published registered utility model applications of Japan 1994-2023

Electronic data base consulted during the international search (name of data base and, where practicable, search terms used)

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| X | JP 57-40699 A (DORYOKURO KAKUNENRYO KAIHATSU JIGYODAN) 06 March 1982 (1982-03-06) | 1-4, 8-9 |
| | p. 3, lower right column, line 14 to p. 4, upper left column, line 18, fig. 3 | |
| Y | | 5-7 |
| Y | JP 2021-151948 A (NIPPON ELECTRIC GLASS CO) 30 September 2021 (2021-09-30) | 1-9 |
| | claims, paragraphs [0030]-[0048], [0072]-[0083], fig. 1, 3-9 | |
| Y | US 5868814 A (GTS DURATEK, INC.) 09 February 1999 (1999-02-09) | 1-9 |
| | column 1, lines 26-36, column 6, line 54 to column 8, line 6, fig. 4-5 | |
| Y | US 2021/0101817 A1 (OWENS-BROCKWAY GLASS CONTAINER INC.) 08 April 2021 (2021-04-08) | 5-7 |
| | paragraphs [0027], [0036], fig. 2A | |
| Y | US 6334337 B1 (MACEDO, P. B. et al.) 01 January 2002 (2002-01-01) | 7 |
| | column 5, lines 7-11, fig. 4 | |
| A | CN 208802981 U (XIANNING CSG GLASS CO., LTD.) 30 April 2019 (2019-04-30) | 1-9 |
| | entire text | |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/026103**

**C.    DOCUMENTS CONSIDERED TO BE RELEVANT**

| Category* | Citation of document, with indication, where appropriate, of the relevant passages | Relevant to claim No. |
|---|---|---|
| A | JP 2007-131515 A (OHARA INC) 31 May 2007 (2007-05-31)<br>  entire text | 1-9 |
| A | WO 2021/075200 A1 (NIPPON ELECTRIC GLASS CO) 22 April 2021 (2021-04-22)<br>  entire text | 1-9 |

Form PCT/ISA/210 (second sheet) (January 2015)

INTERNATIONAL SEARCH REPORT
Information on patent family members

International application No.

**PCT/JP2023/026103**

| Patent document cited in search report | | | Publication date (day/month/year) | Patent family member(s) | | | Publication date (day/month/year) |
|---|---|---|---|---|---|---|---|
| JP | 57-40699 | A | 06 March 1982 | (Family: none) | | | |
| JP | 2021-151948 | A | 30 September 2021 | (Family: none) | | | |
| US | 5868814 | A | 09 February 1999 | (Family: none) | | | |
| US | 2021/0101817 | A1 | 08 April 2021 | WO | 2021/071706 | A1 | |
| US | 6334337 | B1 | 01 January 2002 | (Family: none) | | | |
| CN | 208802981 | U | 30 April 2019 | (Family: none) | | | |
| JP | 2007-131515 | A | 31 May 2007 | CN | 1948195 | A | |
| | | | | TW | 200730457 | A | |
| WO | 2021/075200 | A1 | 22 April 2021 | JP | 2021-66615 | A | |
| | | | | CN | 217418507 | U | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021151948 A